# EUROPEAN PATENT SPECIFICATION

(11) **EP 4 475 322 B1**
(45) Date of publication and mention of the grant of the patent: **09.12.2026**
(21) Application number: 24155668.7
(22) Date of filing: 05.02.2024
(51) Int. Cl.: H01M 50/503, H01M 50/54, H01M 50/55, H01M 50/507, H01M 50/509, H01M 50/548, H01M 50/553

(54) **BATTERY MODULE, BATTERY PACK, AND BATTERY SYSTEM ASSEMBLY**
BATTERIEMODUL, BATTERIEPACK UND BATTERIESYSTEMANORDNUNG
MODULE DE BATTERIE, BLOC-BATTERIE ET ENSEMBLE SYSTÈME DE BATTERIE

(30) Priority: 08.06.2023 KR 20230073266
(43) Date of publication of application: 11.12.2024
(73) Proprietor: Hyundai Mobis Co., Ltd., Gangnam-gu Seoul 06141 (KR)
(72) Inventor: KIM, Ju Hwan, 16891 Yongin-si, Gyeonggi-do (KR)
(74) Representative: Frenkel, Matthias Alexander

(56) References cited:
- GB-A- 2 594 916
- US-A1- 2013 323 574
- US-A1- 2021 104 804
- US-B2- 10 573 918

## Description

### CROSS-REFERENCE TO RELATED APPLICATION

This application claims priority to and the benefit of Korean Patent Application No. 10-2023-0073266, filed on June 08, 2023.

### BACKGROUND

### 1. Field of the Invention

The present invention relates to a battery pack and a battery system assembly including a battery pack in which a battery module is disposed.

### 2. Discussion of Related Art

Unlike primary batteries which cannot be charged, secondary batteries can be charged and discharged, and are used in not only small and high-tech electronic devices such as portable phones, notebook computers, and computers, but also power sources for energy storage systems (ESSs), electric vehicles, and hybrid vehicles.

The secondary batteries widely used in the ESSs, the electric vehicles, and the like may be classified into lithium-ion batteries, lithium-polymer batteries, nickelcadmium batteries, nickel-hydrogen batteries, nickel-zinc batteries, and the like, and are repeatedly charged and discharged with an output voltage of approximately 25 V to 42 V per unit cell. Accordingly, when a higher output voltage and a higher power capacity are required, a plurality of battery cells are connected in series to form battery modules, or the battery modules are connected in series or parallel with additional other circuits to form battery packs.

However, when conventional standardized battery modules are used, there is a problem that an electrical connection passage of a busbar for connecting battery packs extends along a long way. That is, since the busbar is disposed over the battery packs, there are problems that a thickness of a battery increases, interference noise with the module is generated due to vibrations, the busbar is directly exposed to a flame during a thermal runaway, and the busbar functions as a heat diffusion passage between modules because an area thereof is increased.

GB 2 594 916 A discloses a battery module which is configurable and easily serviceable. The battery module includes batter cell units stacked side by side. Each of the battery cell units includes electrical terminal blocks, which are used to make electrical connections to the pouch cell.

US 2021/104804 A1 discloses a battery module having easy and tidy wiring. The battery module includes battery cells electrically connected by bus bars in series. The first output electrode and the second output electrode of the battery module are arranged on the same side of the battery module, such that the wiring of the battery module is easy and tidy.

US 2013/323574 A1 discloses an assembled battery that allows connection of busbars and external terminals by a bolting method (using nuts and bolts) or a welding method. The electric cells are assembled into a battery by electrically connecting the positive and negative external terminals of the cells by metal plates or busbars.

### SUMMARY OF THE INVENTION

The present invention is directed to providing a battery pack and a battery system assembly in which a length of a pack busbar for electrically connecting battery packs is minimized to lower a weight of a product, reduce a material cost, and minimize heating, and since a passage of the pack busbar is not disposed above the battery module, an explosion caused by a short circuit between the pack busbar and a battery cell is prevented during a thermal runaway.

Objectives to be solved by the present invention are not limited to the above-described objectives, and other objectives which are not described above will be clearly understood by those skilled in the art through the following description.

According to the present invention, a battery pack is set forth in claim 1.

Among the battery cells, front ends of a pair of battery cells disposed at one side end of the battery module have positive electrodes, and a rear end of a battery cell disposed on the other side end may have a negative electrode.

In the battery module, a pair of battery cells disposed at an outer side of the battery module may be removed from among the battery cells, the front ends and the rear ends of the battery cells disposed at both side ends of the battery cells module have the same electrode, respectively, and the end plates may be formed to be thick.

According to another aspect of the present invention, among the battery cells, battery cells disposed at both side ends of the battery module are disposed so that front ends and rear ends of battery cells disposed at both side ends of the battery module have different electrodes, and an inner plate for electrical connection with the module busbars is disposed between the battery cells and the end plates.

The inner plate may include insulating plates and a conductor which is disposed between the insulating plates and of which an upper end portion is in contact with each of the module busbars and a lower end portion is in contact with a pack busbar for electrical connection between battery packs.

A protruding portion for preventing a short circuit may be formed to protrude from one surface of the insulating plate facing the battery cell.

An extending portion which extends downward further than a lower end of the insulating plates to be exposed and is in contact with the pack busbar may be formed on the conductor, and the extending portion may be in contact with a gap filler disposed under the battery cell.

The battery pack includes a plurality of first battery modules which are stacked and coupled and a battery module stacked on and coupled to one side end of the first battery module, wherein the battery module includes a second battery module or third battery module in which a positive electrode and a negative electrode are formed at a front end and a rear end thereof.

According to yet another aspect of the present invention, there is provided a battery system assembly, wherein the second battery module and the third battery module are alternately disposed on both side ends of the first battery module in a front-rear direction, and the second battery module and the third battery module are electrically connected by a pack busbar.

In the second battery module, a positive electrode may be formed at a front left end, and a negative electrode may be is formed at a rear right end. In addition, in the third battery module, a positive electrode may be formed at a front right end, and a negative electrode may be formed at a rear left end.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a plan view illustrating a battery system assembly according to one embodiment of the present invention;
FIG. 2 is a side view illustrating the battery system assembly according to one embodiment of the present invention;
FIG. 3 is a view illustrating a second battery module and a third battery module which are connected through a pack busbar according to one embodiment of the present invention;
FIG. 4 is a view illustrating a configuration of a battery pack according to one embodiment of the present invention;
FIG. 5 is a view illustrating a configuration of a third battery module according to one embodiment of the present invention;
FIG. 6 is a view illustrating a configuration of a third battery module according to another embodiment of the present invention;
FIG. 7 is a side view illustrating a structure of an inner plate of the third battery module according to another embodiment of the present invention;
FIG. 8 is a rear view illustrating the structure of the inner plate of the third battery module according to another embodiment of the present invention; and
FIG. 9 is a view illustrating a module busbar in contact with a gap filler in the third battery module according to another embodiment of the present invention.

### DETAILED DESCRIPTION OF EXEMPLARY EMBODIMENTS

Since the present invention may be variously modified and have numerous embodiments, specific embodiments will be illustrated in the accompanying drawings and described in the detailed description.

While terms such as "first" and "second" may be used to describe various components, such components are not limited by these terms. These terms are used only to distinguish one component from another.

Terminology used herein is only for the purpose of describing particular embodiments and is not intended to limit the present invention. The singular forms are intended to include the plural forms, unless the context clearly indicates otherwise. In the present specification, it should be understood that the terms "comprise," "comprising," "include," and/or "including" used herein specify the presence of stated features, numbers, steps, operations, elements, components, and/or combinations thereof but do not preclude the presence or addition of one or more other features, numbers, steps, operations, elements, components, and/or combinations thereof.

In addition, throughout the specification, when components are "connected," this may not only mean that two or more components are directly connected, but this may also mean that two or more components are indirectly connected through other components or are physically connected as well as electrically connected, or are one thing even referred to as different names according to positions or functions thereof.

In addition, when a first component is described as being formed or disposed "on" or "under" a second component, such a description includes both a case in which the two components are formed or disposed in direct contact with each other and a case in which one or more other components are interposed between the two components. In addition, when the first component is described as being formed "on or under" the second component, such a description may include a case in which the first component is formed at an upper side or a lower side with respect to the second component.

Hereinafter, when a battery module and a method of manufacturing the same is described in detail with reference to the accompanying drawings, components which are the same or correspond to each other will be denoted by the same reference numerals, and redundant description will be omitted.

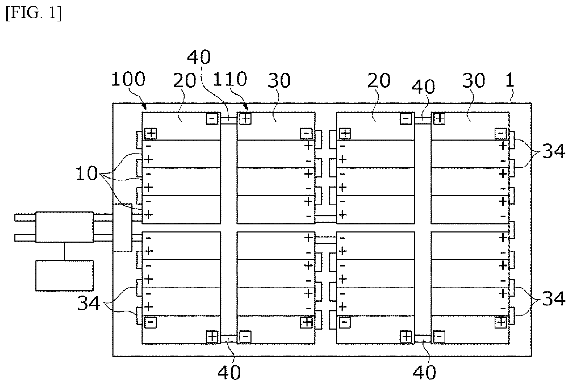

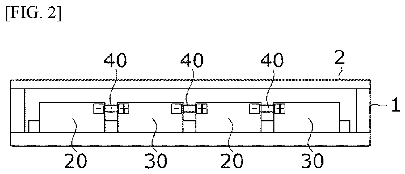

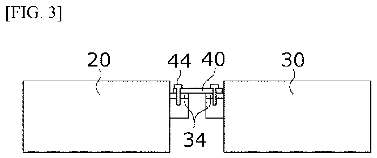

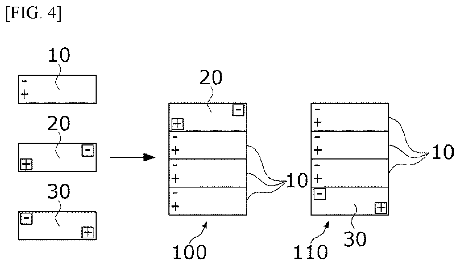

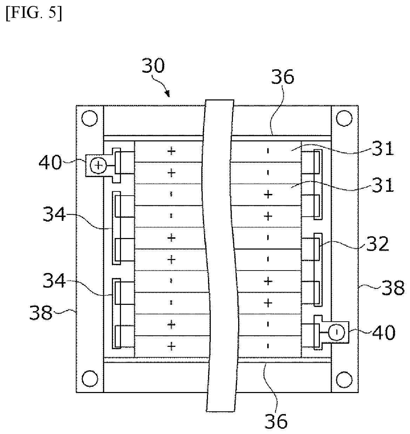

FIG. 1 is a plan view illustrating a battery system assembly according to one embodiment of the present invention, and FIG. 2 is a side view illustrating the battery system assembly according to one embodiment of the present invention. FIG. 3 is a view illustrating a second battery module and a third battery module which are connected through a pack busbar according to one embodiment of the present invention, and FIG. 4 is a view illustrating a configuration of a battery pack according to one embodiment of the present invention. FIG. 5 is a view illustrating a configuration of a third battery module according to one embodiment of the present invention.

A battery module according to one embodiment of the present invention may include battery cells 31 of which positive electrodes and negative electrodes formed at one ends thereof are alternately stacked in a stacking direction, a pair of end plates 36 coupled to both side ends of the battery cells 31, and module busbars 34 electrically connected to lead tabs 32 provided on the battery cells 31, and, among the battery cells 31, the battery cells 31 disposed at both side ends of the battery module may be disposed so that front ends and rear ends thereof have the same electrode.

A battery system assembly may include a case 1, and the case 1 may have a lower portion and a side portion. In addition, a case cover 2 may be coupled to an upper portion of the case 1. A plurality of battery packs 100 and 110 may be disposed in the case 1. In the present embodiment, the battery packs 100 and 110 may be two battery packs 100 and 110 having different battery module arrangements.

In the battery packs 100 and 110, three battery modules 10, 20, and 30 may be stacked and coupled. The battery modules 10, 20, and 30 may be provided as three battery modules 10, 20, and 30 and include first battery modules 10, second battery modules 20, and third battery modules 30. In addition, the battery packs 100 and 110 may include a first battery pack 100 and a second battery pack 110.

The first battery module 10 has a general structure, and a positive electrode and a negative electrode are disposed on a front end or rear end thereof. In FIG. 1, for convenience, a left side is referred to as the front end, and a right side is referred to as the rear end. Accordingly, in the first battery modules 10 disposed on a first row, the positive electrodes and the negative electrodes may be disposed at the front end, and in the first battery modules 10 disposed on a second row, the positive electrodes and the negative electrodes may be disposed at the rear end. The electrode arrangement of the first battery modules 10 may be disposed so that the positive electrodes and the negative electrodes are formed by alternating at the front end, the rear end, the front end, and the rear end of the first battery modules 10 disposed from the front end to the rear end.

Among the battery modules disposed in the battery packs 100 and 110, the number of the first battery modules 10 may be largest. In the present embodiment, the battery packs 100 and 110 may include four battery modules 10, 20, and 30, wherein the first battery modules 10 may be disposed in a central portion, and the second battery modules 20 and the third battery modules 30 may be disposed at a left end and a right end thereof, respectively. In the present embodiment, the reason why the second battery modules 20 and the third battery modules 30 are disposed at both side ends is to minimize lengths of pack busbars 40 by electrically connecting through the busbars 40 at only both ends. As such, when the length of the pack busbar 40 is minimized, a weight of a product can be reduced, a material cost can be reduced, and heating can be minimized. In addition, since a passage of the pack busbars 40 is not disposed above the battery modules 10, 20, and 30, an explosion caused by a short circuit between the pack busbars 40 and the battery cells during a thermal runaway can be prevented.

The positive electrodes and the negative electrodes of the second battery module 20 and the third battery module 30 are formed at the front end and the rear end, respectively. In this case, referring to the second battery module 20 disposed on the first row, the positive electrode may be formed at a front left end, and the negative electrode may be formed at a rear right end. In addition, in the third battery module 30 disposed on the second row, the positive electrode may be formed at a front right end, and the negative electrode may be formed at a rear left end. As described above, when the second battery modules 20 and the third battery modules 30 are alternately disposed in a front-rear direction, the positive electrodes and the negative electrodes may be electrically connected by the pack busbars 40.

For example, referring to a left upper end of FIG. 1, the negative electrode of a rear right end of the second battery module 20 and the positive electrode of a front right end of the third battery module 30 may be connected to the pack busbar 40, and the negative electrode of a rear left end of the third battery module 30 and the positive electrode of a front left end of the second battery module 20 may be connected to the pack busbar 40.

The above-described second battery modules 20 and third battery modules 30 are alternately disposed along both side ends of the first battery modules 10 which are mainly disposed, and actual electrical connection between the battery packs 100 and 110 may be made through connection between the second battery modules 20 and the third battery modules 30.

In addition, in the battery system assembly, the second battery module 20 and the third battery module 30 disposed at a front end may be formed so that the positive electrode or the negative electrode is positioned to be close to the first battery module 10 at the front end. This is for minimizing the length of the module busbar 34 when the second battery module 20 and the third battery module 30 are directly stacked on and electrically connected to the first battery module 10.

Referring to FIG. 3, the module busbars 34 may be connected to a front end or a rear end of the second battery module 20 and the third battery module 30, and the pack busbar 40 may be connected in contact with upper portions of the neighboring module busbars 34. In this case, the pack busbar 40 and the module busbars 34 may be fastened through fastening holes 44 passing through the pack busbar 40 and the module busbars 34.

Referring to FIG. 4, in the present embodiment, the battery packs 100 and 110 may be formed by stacking and coupling the first battery module 10, the second battery module 20, and the third battery module 30. The first battery pack 100 is formed by stacking three first battery modules 10 in a side surface direction and coupling the second battery module 20 to one side end portion, and the second battery pack 110 is formed by stacking three first battery modules 10 in a side surface direction and coupling the third battery module 30 to one side end portion.

The second battery module 20 and the third battery module 30 may be turned to change positions of the front ends and the rear ends and stacked on one side end portions of the first battery modules 10. For example, in FIG. 1, when the second battery module 20 is disposed at a left upper end, the second battery module 20 may not be disposed first at a left lower end and may be disposed next to the third battery module 30 in a state in which the second battery module 20 is turned to change positions of the front ends and the rear ends.

Hereinafter, the third battery module 30 will be described with reference to FIG. 5. Components included in the third battery module 30 may be commonly included in the first battery module 10 and the second battery module 20.

A plurality of battery cells 31 having positive electrodes or negative electrodes are stacked in both end portions of the third battery module 30. The plurality of battery cells 31 may be stacked in a side surface direction, and battery cells 31 having the same electrode arrangement structure may be formed as a pair of battery cells 31 so that electrodes of both end portions may be alternately disposed to have opposite positions when stacked. For example, the pair of battery cells 31 of which the front ends have the positive electrodes and the rear ends have the negative electrodes, and the pair of battery cells 31 of which the front ends have the negative electrodes and the rear ends have the positive electrodes may be alternately disposed from a left side.

The lead tabs 32 may be provided on both side ends of the pair of battery cells 31, and the module busbars 34 may be connected in contact with upper portions of the neighboring lead tabs 32. In addition, the end plates 36 are coupled to both side ends of the third battery module 30. In addition, cover assemblies 38 are coupled to a front end and a rear end of the third battery module 30 to cover the battery cells 31.

Meanwhile, the above-described third battery module 30 is formed by removing one battery cell 31 disposed at an outer side from the pair of battery cells 31 actually stacked and coupled to each other. For example, in the third battery module 30, one pair of battery cells 31 disposed at an outer side of the first battery module 10 in which five pairs of battery cells 31 are stacked are removed, and the end plate 36 is formed to be thick at a portion at which the one pair of battery cells 31 are removed. In this case, when the even number of pairs of battery cells 31 are disposed in the first battery module 10, the positive electrodes and the negative electrodes are disposed at only the front end or the rear end, and thus, the length of the pack busbar 40 for electrical connection between the first battery modules 10 increases. Accordingly, in the present embodiment, the pair of battery cells 31 disposed at the outer side are removed, the positive electrodes and the negative electrodes may be formed on the front end and the rear end.

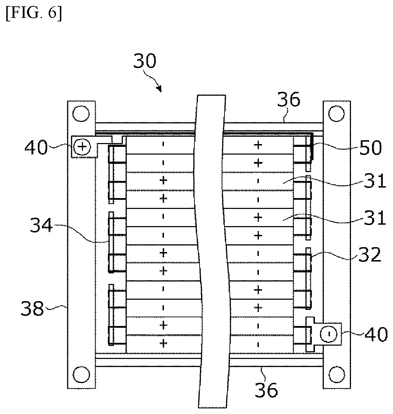

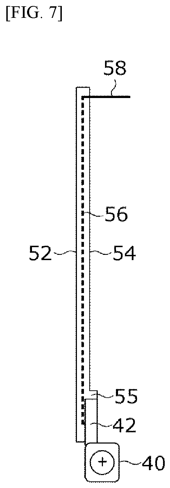

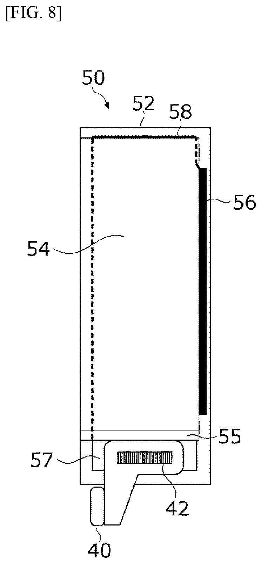

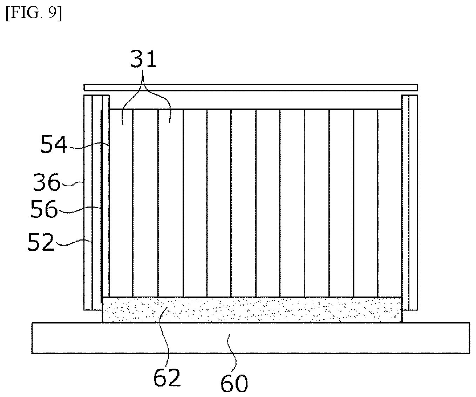

FIG. 6 is a view illustrating a configuration of a third battery module according to another embodiment of the present invention, and FIG. 7 is a side view illustrating a structure of an inner plate of the third battery module according to another embodiment of the present invention. FIG. 8 is a rear view illustrating the structure of the inner plate of the third battery module according to another embodiment of the present invention, and FIG. 9 is a view illustrating a module busbar in contact with a gap filler in the third battery module according to another embodiment of the present invention.

Referring to FIG. 6, a third battery module 30 according to another embodiment of the present invention uses the first battery module 10 described in the above-described embodiment without change and also uses an inner plate 50 to reduce a distance between electrodes of battery packs 100 and 110.

The inner plate 50 may include a first insulating plate 52, a second insulating plate 54, a conductor 56 disposed between the first insulating plate 52 and the second insulating plate 54, and a pack busbar 40 electrically connected to the conductor 56.

In this case, the first insulating plate 52 and the second insulating plate 54 may be formed as one plate. The first insulating plate 52 and the second insulating plate 54 may serve to insulate between an end plate 36 and the conductor 56 and be formed of a plastic material. A protruding portion 55 for preventing a short circuit between the pack busbar 40 and a battery cell 31 may be formed to protrude from a lower end portion of the second insulating plate 54 toward the battery cell 31. However, the protruding portion 55 does not need to be formed on only the lower end portion of the second insulating plate 54, and a plurality of protruding portions 55 may be vertically formed on one surface facing the battery cell 31.

The conductor 56 may serve as a moving passage of an electrode and be formed of a metal material such as aluminum and copper. A contact portion 58 bent toward the battery cell 31 is formed on an upper end portion of the conductor 56 and is in contact with a module busbar 34. In addition, a lower end portion of the conductor 56 may be electrically connected to the pack busbar 40 through the module busbar 34 and the conductor 56 from the battery cell 31 because of being in contact with the pack busbar 40 as in the drawings.

A welding portion 42 for connection with the conductor 56 may be formed on the pack busbar 40, and the pack busbar 40 may be electrically connected to the conductor 56 exposed downward through welding. Meanwhile, an extending portion 57 extending downward further than a lower end of the second insulating plate 54 is formed on the conductor 56, and the extending portion 57 is in contact with a gap filler 62 disposed under the battery cell 31.

Referring to FIG. 9, a cooling plate 60 is disposed under the battery cell 31. The cooling plate 60 serves to dissipate heat emitted from the battery cell 31. In addition, the gap filler 62 is applied between the battery cell 31 and the cooling plate 60 so that the heat generated by the battery cell 31 is transferred to the cooling plate 60. The gap filler 62 may be formed of polyurethane or silicon to which boron nitride (BN), aluminum nitride (AIN), silicon carbide (SiC), magnesium oxide (MgO), aluminum, or the like may be added.

Generally, although only a portion between the battery cell 31 and the cooling plate 60 may be coated with the gap filler 62, in the present embodiment, the gap filler 62 may extend to protrude toward each of the pack busbars 40 disposed at a front side and a rear side in order to transfer heat emitted from the pack busbar 40. The gap filler 62 formed as described above may be in direct contact with the extending portion 57 of the conductor 56 so that heat emitted from the module busbar 34 and the pack busbar 40 can be smoothly transferred to the cooling plate 60 through the gap filler 62.

According to one embodiment of the present invention, as a length of a pack busbar for electrically connecting battery packs is minimized, a weight of a product can be lowered, a material cost can be reduced, heating can be minimized, and since a passage of the pack busbar is not positioned above a battery module, an explosion caused by a short circuit between the pack busbar and a battery cell during a thermal runaway can be prevented.

While the present invention has been described above with reference to exemplary embodiments, it may be understood by those skilled in the art that various modifications and changes of the present invention may be made within the scope of the present invention defined by the appended claims.

## Claims

1. A battery pack (100, 110), comprising:
a plurality of first battery modules (10) which are stacked and coupled, wherein positive electrodes and negative electrodes of the first battery modules (10) are disposed on one of a front end and a rear end of the first battery modules; and
a side end battery module (30) comprising:
battery cells (31) of which positive electrodes and negative electrodes which are formed at one end portions thereof are alternately stacked in a stacking direction;
a pair of end plates (36) coupled to both side ends of the stacked battery cells (31); and
module busbars (34) electrically connected to lead tabs (32) provided on the battery cells (31),
wherein the side end battery module (30) includes a positive electrode and a negative electrode at the front end and the rear end, respectively, and
wherein:
among the battery cells (31), front ends and rear ends of the battery cells (31) disposed at both side ends of the side end battery module (30) have the same electrode polarity, respectively, or
wherein:
among the battery cells (31), front ends and rear ends of battery cells (31) disposed at both side ends of the side end battery module (30) have different electrode polarities, and
an inner plate (50) for electrical connection with the module busbars (34) is disposed between the battery cells (31) and the end plates (36).

2. The battery pack (100, 110) of claim 1, wherein, among the battery cells (31), front ends and rear ends of the battery cells (31) disposed at both side ends of the side end battery module (30) have the same electrode polarity, respectively, and wherein among the battery cells (31):
front ends of a pair of battery cells (31) disposed on one side end of the side end battery module (30) have positive electrodes; and
a rear end of a battery cell (31) disposed on the other side end has a negative electrode.

3. The battery pack (100, 110) of claim 1 or 2, wherein:
the side end battery module (30) has an odd number of pairs of battery cells (31).

4. The battery pack (100, 110) of claim 1, wherein, among the battery cells (31), front ends and rear ends of battery cells (31) disposed at both side ends of the side end battery module (30) have different electrode polarities, and wherein the inner plate (50) includes:
insulating plates (52, 54); and
a conductor (56) which is disposed between the insulating plates (52, 54) and of which an upper end portion is in contact with the module busbars (34) and a lower end portion is in contact with a pack busbar (40) for electrical connection between battery packs (100, 110).

5. The battery pack (100, 110) of claim 4, wherein a protruding portion (55) for preventing a short circuit is formed to protrude from one surface of the insulating plate (54) facing the battery cell (31).

6. The battery pack (100, 110) of claim 4 or 5, wherein an extending portion (57) which extends downward further than a lower end of the insulating plate (54) to be exposed and is in contact with the pack busbar (40) is formed on the conductor (56); and
the extending portion (57) is in contact with a gap filler (62) disposed under the battery cell (31).

7. A battery system assembly comprising a battery pack (100, 110) of any of claims 1 to 6,
wherein the side end battery module includes a second battery module and a third battery module alternately disposed on both side ends of the first battery module (10) in a front-rear direction, and
the second battery module and the third battery module are electrically connected by a pack busbar (40).

8. The battery system assembly of claim 7, wherein:
in the second battery module, a positive electrode is formed at a front left end, and a negative electrode is formed at a rear right end; and
in the third battery module, a positive electrode is formed at a front right end, and a negative electrode is formed at a rear left end.

## Patentansprüche

1. Batteriepack (100, 110), umfassend:
eine Mehrzahl erster Batteriemodule (10), die gestapelt und gekoppelt sind, wobei positive Elektroden und negative Elektroden der ersten Batteriemodule (10) an einem von einem vorderen Ende und einem hinteren Ende der ersten Batteriemodule angeordnet sind; und
ein Seitenend-Batteriemodul (30), umfassend:
Batteriezellen (31), deren positive Elektroden und negative Elektroden, die an jeweils einem ihrer Endabschnitte ausgebildet sind, in einer Stapelrichtung abwechselnd gestapelt sind;
ein Paar Endplatten (36), die mit beiden Seitenenden der gestapelten Batteriezellen (31) gekoppelt sind; und
Modulsammelschienen (34), die elektrisch mit Anschlusslaschen (32) verbunden sind, die an den Batteriezellen (31) vorgesehen sind,
wobei das Seitenend-Batteriemodul (30) eine positive Elektrode und eine negative Elektrode an dem vorderen Ende bzw. dem hinteren Ende umfasst, und
wobei:
unter den Batteriezellen (31) die vorderen Enden und die hinteren Enden der Batteriezellen (31), die an beiden Seitenenden des Seitenend-Batteriemoduls (30) angeordnet sind, jeweils die gleiche Elektrodenpolarität aufweisen, oder
wobei:
unter den Batteriezellen (31) die vorderen Enden und die hinteren Enden der Batteriezellen (31), die an beiden Seitenenden des Seitenend-Batteriemoduls (30) angeordnet sind, unterschiedliche Elektrodenpolaritäten aufweisen, und
eine Innenplatte (50) zur elektrischen Verbindung mit den Modulsammelschienen (34) zwischen den Batteriezellen (31) und den Endplatten (36) angeordnet ist.

2. Batteriepack (100, 110) nach Anspruch 1, wobei unter den Batteriezellen (31) die vorderen Enden und die hinteren Enden der Batteriezellen (31), die an beiden Seitenenden des Seitenend-Batteriemoduls (30) angeordnet sind, jeweils die gleiche Elektrodenpolarität aufweisen, und wobei unter den Batteriezellen (31):
die vorderen Enden eines Paars von Batteriezellen (31), die an einem Seitenende des Seitenend-Batteriemoduls (30) angeordnet sind, positive Elektroden aufweisen; und
ein hinteres Ende einer Batteriezelle (31), die an dem anderen Seitenende angeordnet ist, eine negative Elektrode aufweist.

3. Batteriepack (100, 110) nach Anspruch 1 oder 2, wobei:
das Seitenend-Batteriemodul (30) eine ungerade Anzahl von Paaren von Batteriezellen (31) aufweist.

4. Batteriepack (100, 110) nach Anspruch 1, wobei unter den Batteriezellen (31) die vorderen Enden und die hinteren Enden der Batteriezellen (31), die an beiden Seitenenden des Seitenend-Batteriemoduls (30) angeordnet sind, unterschiedliche Elektrodenpolaritäten aufweisen, und wobei die Innenplatte (50) umfasst:
Isolierplatten (52, 54); und
einen Leiter (56), der zwischen den Isolierplatten (52, 54) angeordnet ist und dessen oberer Endabschnitt mit den Modulsammelschienen (34) in Kontakt steht und dessen unterer Endabschnitt mit einer Packsammelschiene (40) zur elektrischen Verbindung zwischen Batteriepacks (100, 110) in Kontakt steht.

5. Batteriepack (100, 110) nach Anspruch 4, wobei ein vorstehender Abschnitt (55) zum Verhindern eines Kurzschlusses derart ausgebildet ist, dass er von einer der Batteriezelle (31) zugewandten Oberfläche der Isolierplatte (54) vorsteht.

6. Batteriepack (100, 110) nach Anspruch 4 oder 5, wobei an dem Leiter (56) ein Verlängerungsabschnitt (57) ausgebildet ist, der sich über ein unteres Ende der Isolierplatte (54) hinaus nach unten erstreckt, sodass er freiliegt, und mit der Packsammelschiene (40) in Kontakt steht; und
der Verlängerungsabschnitt (57) mit einem Spaltfüller (62), der unter der Batteriezelle (31) angeordnet ist, in Kontakt steht.

7. Batteriesystemanordnung, umfassend einen Batteriepack (100, 110) nach einem der Ansprüche 1 bis 6,
wobei das Seitenend-Batteriemodul ein zweites Batteriemodul und ein drittes Batteriemodul umfasst, die in einer Vorne-Hinten-Richtung abwechselnd an beiden Seitenenden des ersten Batteriemoduls (10) angeordnet sind, und
das zweite Batteriemodul und das dritte Batteriemodul durch eine Packsammelschiene (40) elektrisch verbunden sind.

8. Batteriesystemanordnung nach Anspruch 7, wobei:
in dem zweiten Batteriemodul eine positive Elektrode an einem vorderen linken Ende ausgebildet ist und eine negative Elektrode an einem hinteren rechten Ende ausgebildet ist; und
in dem dritten Batteriemodul eine positive Elektrode an einem vorderen rechten Ende ausgebildet ist und eine negative Elektrode an einem hinteren linken Ende ausgebildet ist.

## Revendications

1. Bloc-batteries (100, 110) comprenant:
une pluralité de premiers modules de batterie (10) qui sont empilés et reliés entre eux, dans lequel les électrodes positives et les électrodes négatives des premiers modules de batterie (10) sont disposées sur l'une parmi une extrémité avant et une extrémité arrière des premiers modules de batterie; et
un module de batterie d'extrémité latérale (30) comprenant:
des éléments de batterie (31) dont les électrodes positives et les électrodes négatives qui sont formées au niveau de l'une de leurs extrémités sont empilées en alternance dans un sens d'empilement;
une paire de plaques d'extrémité (36) reliées aux deux extrémités latérales des éléments de batterie empilées (31); et
des barres omnibus de module (34) connectées électriquement aux languettes de connexion (32) disposée sur les éléments de batterie (31),
dans lequel le module de batterie d'extrémité latérale (30) comprend une électrode positive et une électrode négative situées respectivement à l'extrémité avant et à l'extrémité arrière, et
dans lequel:
parmi les éléments de batterie (31), les extrémités avant et arrière des éléments de batterie (31) disposées aux deux extrémités latérales de l'extrémité latérale du module de batterie (30) présentent respectivement la même polarité d'électrode, ou
dans lequel:
parmi les éléments de batterie (31), les extrémités avant et arrière des éléments de batterie (31) disposées aux deux extrémités latérales de l'extrémité latérale du module de batterie (30) présentent des polarités d'électrodes différentes, et
une plaque interne (50), destinée à assurer la connexion électrique avec les barres omnibus de module (34), est disposée entre les éléments de batterie (31) et les plaques d'extrémité (36).

2. Bloc-batteries (100, 110) selon la revendication 1, dans lequel, parmi les éléments de batterie (31), les extrémités avant et arrière des éléments de batterie (31) disposées aux deux extrémités latérales de l'extrémité latérale du module de batterie (30) présentent respectivement la même polarité d'électrode, et dans lequel, parmi les éléments de batterie (31):
les extrémités avant d'une paire d'éléments de batterie (31) disposées sur une extrémité latérale de l'extrémité latérale du module de batterie (30) comportent des électrodes positives; et
une extrémité arrière d'une cellule de batterie (31) disposée à l'autre extrémité comporte une électrode négative.

3. Bloc-batteries (100, 110) selon la revendication 1 ou 2, dans lequel:
l'extrémité latérale du module de batterie (30) comporte un nombre impair de paires d'éléments de batterie (31).

4. Bloc-batteries (100, 110) selon la revendication 1, dans lequel, parmi les éléments de batterie (31), des extrémités avant et arrière d'éléments de batterie (31) disposées aux deux extrémités latérales de l'extrémité latérale du module de batterie (30) présentent des polarités d'électrodes différentes, et dans lequel la plaque intérieure (50) comprend:
des plaques isolantes (52, 54); et
un conducteur (56) qui est disposé entre les plaques isolantes (52, 54) et dont une partie d'extrémité supérieure est en contact avec les barres omnibus de module (34) et une partie d'extrémité inférieure est en contact avec une barre omnibus de bloc (40) assurant la connexion électrique entre les blocs-batteries (100, 110).

5. Bloc-batteries (100, 110) selon la revendication 4, dans lequel une partie en saillie (55) destinée à empêcher un court-circuit est formée de manière à faire saillie d'une surface de la plaque isolante (54) faisant face à l'élément de batterie (31).

6. Bloc-batteries (100, 110) selon la revendication 4 ou 5, dans lequel une partie en saillie (57), qui s'étend vers le bas au-delà de l'extrémité inférieure de la plaque isolante (54) de manière à être visible et est en contact avec la barre omnibus de bloc (40), est formée sur le conducteur (56); et
la partie (57) qui s'étend est en contact avec un élément de remplissage (62) disposé sous l'élément de batterie (31).

7. Ensemble système de batterie comprenant un bloc-batterie (100, 110) selon l'une quelconque des revendications 1 à 6,
dans lequel le module de batterie d'extrémité latérale comprend un deuxième module de batterie et un troisième module de batterie disposés en alternance aux deux extrémités latérales du premier module de batterie (10) dans le sens avant-arrière, et
le deuxième module de batterie et le troisième module de batterie sont connectés électriquement par une barre omnibus de bloc (40).

8. Ensemble système de batterie selon la revendication 7, dans lequel:
dans le deuxième module de batterie, une électrode positive est formée à l'extrémité avant gauche, et une électrode négative est formée à l'extrémité arrière droite; et
dans le troisième module de batterie, une électrode positive est formée à l'extrémité avant droite, et une électrode négative est formée à l'extrémité arrière gauche.
